# EUROPÄISCHE PATENTANMELDUNG

(11) **EP 2 067 816 A2**
(43) Veröffentlichungstag der Anmeldung: **10.06.2009**
(21) Anmeldenummer: 08020350.8
(22) Anmeldetag: 22.11.2008
(51) Int. Cl.: C08K 5/3492, C08L 75/04, C08L 75/10

(54) **Selbstverlöschende, thermoplastische Polyurethane, ein Verfahren zu ihrer Herstellung und ihre Verwendung**

(30) Priorität: 05.12.2007 DE 102007058435
(71) Anmelder: Bayer MaterialScience AG, 51368 Leverkusen (DE)
(72) Erfinder: Peerlings, Henricus, Dr., 42699 Solingen (DE); Winkler, Juergen, 40764 Langenfeld (DE)

(57) **Zusammenfassung**

Die vorliegende Erfindung betrifft selbstverlöschende, thermoplastische Polyurethane, ein Verfahren zu ihrer Herstellung sowie ihre Verwendung.

## Beschreibung

Die vorliegende Erfmdung betrifft selbstverlöschende, thermoplastische Polyurethane, ein Verfahren zu ihrer Herstellung sowie ihre Verwendung.

Thermoplastische Polyurethane (TPU) sind wegen ihrer guten Elastomereigenschaften und thermoplastischen Verarbeitbarkeit von großer technischer Bedeutung. Eine Übersicht über die Herstellung, Eigenschaften und Anwendungen von TPU ist z.B. im Kunststoff Handbuch [G. Becker, D. Braun], Band 7 "Polyurethane", München, Wien, Carl Hanser Verlag, 1983 gegeben.

TPU werden zumeist aus linearen Polyolen (Makrodiolen), wie Polyester-, Polyether- oder Polycarbonatdiolen, organischen Diisocyanaten und kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren (GB-A 1 057 018) und das Extruderverfahren (DE-A 19 64 834).

Der Aufbau der thermoplastisch verarbeitbaren Polyurethanelastomere kann entweder schrittweise (Prepolymerdosierverfahren) oder durch die gleichzeitige Reaktion aller Komponenten in einer Stufe (One-shot-Dosierverfahren) erfolgen.

Ein Nachteil der TPU ist ihre leichte Entflammbarkeit. Zur Verminderung dieses Nachteils werden den TPU Flammschutzmittel, wie beispielsweise halogenhaltige Verbindungen, einverleibt. Der Zusatz dieser Produkte wirkt sich jedoch vielfach negativ auf die mechanischen Eigenschaften der erhaltenen TPU-Formmassen aus. Auch sind aufgrund der korrosiven Wirkung der halogenhaltigen Substanzen halogenfreie selbstverlöschende TPU-Formmassen erstrebenswert.

In EP-B 0 617 079 wird der Einsatz einer Kombination aus einem Phosphat und/oder Phosphonat mit Melamincyanurat beschrieben. Vor allem die Verteilung dieses hochschmelzenden Füllstoffes in der Polymermatrix ist nicht trivial. Außerdem ist trotz des hohen Füllgrades das Brandverhalten oft nicht ausreichend.

In US-A 5 110 850 wird der Einsatz von Melamin beschrieben. Es muss eine sehr große Menge an Melamin zugegeben werden, und trotzdem ist das Brandverhalten nicht ausreichend.

Vor allem bei einem Einsatz des TPU im Bereich Elektrik/Elektronik, insbesondere in Kabeln, sind die Anforderungen an das Brandverhalten sehr hoch. Zudem wird in Kabeln häufig leicht brennbares, nicht-flammgeschütztes Polyolefin (z.B. Polypropylen) in der Ummantelung eingesetzt, wodurch dem TPU zusätzlich zur eigenen Flammwidrigkeit die Aufgabe zufällt, dieses Polyolefin ebenfalls zu löschen. Diese hohen Anforderungen an das Brandverhalten bei einer gleichzeitig dünnen Wanddicke der TPU-Ummantelung sowie guter Extrudierbarkeit werden durch die bekannten TPU-Materialien nicht erfüllt.

Aufgabe der vorliegenden Erfindung war es daher, selbstverlöschende thermoplastische Polyurethane zur Verfügung zu stellen, die als Kabelummantelungsmaterial keine halogenhaltigen Flammschutzmittel enthalten, nach Entzündung mit einer heißen Flamme in wenigen Sekunden verlöschen und nicht abtropfen bzw. nicht brennend abtropfen.

Diese Aufgabe konnte dadurch gelöst werden, dass zur Flammfestausrüstung das TPU eine Mischung aus Melamin und Melamincyanurat und ggf. zusätzliche Flammschutzmittel enthält.

Gegenstand der Erfindung sind daher selbstverlöschende, thermoplastische Polyurethane, die erhältlich sind aus
a) organischen und/oder modifizierten organischen Diisocyanaten mit
b) Polyhydroxylverbindungen, insbesondere im Wesentlichen difunktionellen Polyhydroxylverbindungen und
c) Kettenverlängerungsmitteln in Gegenwart von
d) Flammschutzmitteln sowie gegebenenenfalls
e) Katalysatoren
f) Kettenabbrechern
g) Hilfsmitteln und/oder Zusatzstoffen,
wobei als Flammschutzmittel Melamincyanurat und Melamin und gegebenenfalls zusätzliche andere Flammschutzmittel eingesetzt werden.

Ein weiterer Gegenstand der Erfindung ist ein Verfahren zur Herstellung der erfindungsgemäßen, selbstverlöschenden, thermoplastischen Polyurethane, wobei
A) organische und/oder modifizierte organische Diisocyanate (a) mit
B) Polyhydroxylverbindungen (b), insbesondere im Wesentlichen difunktionellen Polyhydroxylverbindungen und
C) Kettenverlängerungsmitteln (c) in Gegenwart von
D) Flammschutzmitteln (d) und gegebenenenfalls
E) Katalysatoren (e),
F) Kettenabbrechern (f),
G) Hilfsmitteln und/oder Zusatzstoffen (g)
umgesetzt werden, wobei als Flammschutzmittel (d) Melamin und Melamincyanurat und gegebenenfalls zusätzliche andere Flammschutzmittel eingesetzt werden.

Das Melamin und das Melamincyanurat können gegebenenfalls auch nachträglich über eine Kompoundierung dem fertigen TPU zugegeben werden.

Bei den thermoplastischen Polyurethanen (kurz auch TPU genannt) handelt es sich um im Wesentlichen lineare, thermoplastisch verarbeitbare Polyurethane.

Es war überraschend und in keiner Weise vorhersehbar, dass durch die Verwendung einer Kombination von Melamin und Melamincyanurat selbstverlöschende TPU-Formmassen erhalten werden konnten.

Für die erfindungsgemäße "Flammfestausrüstung" eignen sich prinzipiell alle an sich bekannten TPU, die nach den an sich üblichen Verfahren hergestellt werden können.

### Bevorzugt sind die TPU aus folgenden Komponenten aufgebaut:

Als organische Diisocyanate (a) können aliphatische, cycloaliphatische, araliphatische, aromatische und heterocyclische Diisocyanate oder beliebige Gemische dieser Diisocyanate verwendet werden (vgl. HOUBEN-WEYL "Methoden der organischen Chemie", Band E20 "Makromolekulare Stoffe", Georg Thieme Verlag, Stuttgart, New York 1987, S. 1587-1593 oder Justus Liebigs Annalen der Chemie, 562, Seiten 75 bis 136).

Im Einzelnen seien beispielhaft genannt: aliphatische Diisocyanate wie Ethylendiisocyanat, 1,4-Tetramethylendiisocyanat, 1,6-Hexamethylendiisocyanat, 1,12-Dodecandiisocyanat; cycloaliphatische Diisocyanate wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische; außerdem aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatgehalt von mehr als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 mol-% (berechnet auf Gesamt-Diisocyanat) eines Polyisocyanates verwendet werden, es darf aber höchstens soviel Polyisocyanat zugesetzt werden, dass ein noch thermoplastisch verarbeitbares Produkt entsteht. Beispiele für Polyisocyanate sind Triphenylmethan-4,4',4"-triisocyanat und Polyphenyl-polymethylen-polyisocyanate.

Polyhydroxylverbindungen oder Polyole (b) sind solche mit im Mittel mindestens 1,8 bis höchstens 3,0 zerewitinoff-aktiven Wasserstoffatomen und einem zahlenmittleren Molekulargewicht M̅ₙ von 450 bis 10000, bevorzugt 450 bis 6000. Produktionsbedingt enthalten diese oft kleine Mengen an nicht-linearen Verbindungen. Häufig spricht man daher auch von "im Wesentlichen linearen Polyolen". Bevorzugt sind Polyester-, Polyether-, Polycarbonat-Diole oder Gemische aus diesen.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Es können auch trifunktionelle Polyether in Anteilen von 0 bis 30 Gew.-% bezogen auf die bifunktionellen Polyether eingesetzt werden, jedoch höchstens in solcher Menge, dass ein noch thermoplastisch verarbeitbares Produkt entsteht. Die im Wesentlichen linearen Polyether-Diole besitzen vorzugsweise zahlenmittlere Molekulargewichte M̅ₙ von 450 bis 6000. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z:B. Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren wie ω-Hydroxycapronsäure oder Polymerisationsprodukte von Lactonen, z.B. gegebenenfalls substituierten ω-Caprolactonen. Als Polyester-Diole vorzugsweise verwendet werden Ethandiol-polyadipate, 1,4-Butandiolpolyadipate, Ethandiol-1,4-butandiolpolyadipate, 1,6-Hexandiol-neopentylglykolpolyadipate, 1,6-Hexandiol-1,4-butandiolpolyadipate und Polycaprolactone. Die Polyester-Diole besitzen zahlenmittlere Molekulargewichte M̅ₙ von 450 bis 10000 und können einzeln oder in Form von Mischungen untereinander zur Anwendung kommen.

Kettenverlängerungsmittel (c) besitzen im Mittel 1,8 bis 3,0 zerewitinoffaktive Wasserstoffatome und haben ein Molekulargewicht von 60 bis 400. Hierunter versteht man neben Aminogruppen, Thiolgruppen oder Carboxylgruppen aufweisenden Verbindungen solche mit zwei bis drei, bevorzugt zwei Hydroxylgruppen.

Als Kettenverlängerungsmittel werden vorzugsweise aliphatische Diole mit 2 bis 14 Kohlenstoffatomen eingesetzt, wie z.B. Ethandiol, 1,2-Propandiol, 1,3-Propandiol, 1,4-Butandiol, 2,3-Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(β-hydroxyethyl)-hydrochinon, ethoxylierte Bisphenole, z.B. 1,4-Di(β-hydroxyethyl)-bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4-toluylendiamin oder 3,5-Diethyl-2,6-toluylendiamin oder primäre mono-, di-, tri- oder tetraalkylsubstituierte 4,4'-Diaminodiphenylmethane. Besonders bevorzugt werden als Kettenverlängerer Ethandiol, 1,4-Butandiol, 1,6-Hexandiol, 1,4-Di(β-hydroxyethyl)-hydrochinon oder 1,4-Di(β-hydroxyethyl)-bisphenol A verwendet. Es können auch Gemische der oben genannten Kettenverlängerer eingesetzt werden. Daneben können auch kleinere Mengen an Triolen zugesetzt werden.

Als Flammschutzmittel (d) wird erfindungsgemäß eine Mischung aus Melamin und Melamincyanurat eingesetzt. Melamin und Melamincyanaurat können in handelsüblicher Form eingesetzt werden.

Die Gesamtmenge an Melamin und Melamincyanurat beträgt vorzugsweise zwischen 10 und 60 Gew.-%, besonders bevorzugt 15 bis 50 Gew.-% bezogen auf die Gesamtmenge an TPU. Das Gewichtsverhältnis zwischen Melamin und Melamincyanurat beträgt zwischen 30:1 bis 1:30, bevorzugt 10:1 bis 1:10.

Gegebenenfalls können auch zusätzliche Flammschutzmittel (ausgenommen Melamin und Melamincyanurat) zum Einsatz kommen, wie z.B. Phosphate und/oder Phosphonate. Für eine Übersicht siehe z.B. H. Zweifel, Plastics Additives Handbook, 5th Ed., Hanser Verlag München, 2001, Kapitel 12; J. Green, J. of Fire Sciences, 1997, 15, S. 52-67 oder Kirk-Othmer Encyclopedia of Chemical Technology, 4th Ed., Vol. 10, John Wiley & Sons, New York, S. 930-998. Ebenfalls können als zusätzliche Flammschutzmittel einbaufähige Flammschutzmittel zum Einsatz kommen wie z.B. beschrieben in US-B 7 160 974.

Geeignete Katalysatoren (e) sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylanmino-ethoxy)ethanol, Diazabicyclo[2,2,2]octan und ähnliche sowie insbesondere organische Metallverbindungen wie Titansäureester, Eisenverbindungen, Wismuthverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen-, Wismuth- und Zinnverbindungen. Die Gesamtmenge an Katalysatoren in den erfindungsgemäßen TPU beträgt in der Regel etwa 0 bis 5 Gew.-%, bevorzugt 0 bis 2 Gew.-%, bezogen auf die Gesamtmenge an TPU.

Gegenüber Isocyanaten monofunktionelle Verbindungen (f) können in Anteilen bis zu 2 Gew.-%, bezogen auf TPU, als sogenannte Kettenabbrecher eingesetzt werden. Geeignet sind z.B. Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die erfindungsgemäßen, thermoplastischen Polyurethanelastomere können Hilfs- und Zusatzstoffe (g) in Mengen bis zu maximal 20 Gew.-%, bezogen auf die Gesamtmenge an TPU, enthalten. Typische Hilfs- und Zusatzstoffe, sind Gleitmittel und Entformungsmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Farbstoffe, Pigmente, anorganische und/oder organische Füllstoffe, Weichmacher, wie Phosphate, Phthalate, Adipate, Sebacate und Alkylsulfonsäureester, fungistatisch und bakteriostatisch wirkende Substanzen sowie Füllstoffe und deren Mischungen und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 , dem Taschenbuch für Kunststoff-Additive von R.Gächter u. H.Müller (Hanser Verlag München 1990) oder der DE-A 29 01 774 zu entnehmen.

Zur Herstellung der erfindungegemäßen TPU werden die Komponenten (a), (b), (c) und ggf. (f) in Gegenwart des erfindungsgemäßen Flammschutzmittels (d) und ggf. der Katalysatoren (e) und der Hilfsmittel und/oder Zusatzstoffe (g) in solchen Mengen zur Reaktion gebracht, dass das Äquivalenzverhältnis von NCO Gruppen der Diisocyanate (a) zur Summe der zerewitinoffaktiven Wasserstoffatome enthaltenden Komponenten (b), (c), (d) und (f) 0,9:1 bis 1,1:1 beträgt. Falls ein einbaufähiges Flammschutzmittel unter (d) verwendet wird, wird dies in jedem fall während der Reaktion der Aufbaukomponenten (a), (b) und (c) anwesend sein, während das Melamin und Melamincyanurat auch nachträglich dem TPU zugegeben werden können.

Die erfindungsgemäßen TPU-Formmassen sind selbstverlöschend, tropfen nicht bzw. tropfen nicht brennend ab.

Das erfindungsgemäße TPU kann gegebenenfalls weiter bearbeitet werden, z.B. durch Temperung des TPU zur Herstellung von Platten oder Blöcken, durch Zerkleinerung oder Granulierung in Schreddern oder Mühlen, durch Entgasung sowie Granulierung unter Aufschmelzen. Bevorzugt wird das TPU durch ein Aggregat zur kontinuierlichen Entgasung und Strangbildung geführt. Bei diesem Aggregat kann es sich z.B. um eine Mehrwellenschneckenmaschine (ZSK) handeln.

Die erfindungsgemäßen TPU werden bevorzugt zur Herstellung von Spritzgießartikeln und Extrusionsartikeln, insbesondere zur Kabelummantelung eingesetzt.

Die Erfindung soll anhand der nachfolgenden Beispiele näher erläutert werden.

### Beispiele

Im Folgenden verwendete Abkürzungen:

| | |
|---|---|
| Terathane^{®} 1000 | Polyether mit einem Molekulargewicht von Mₙ = 1000 g/mol; Produkt der Firma Du Pont de Nemours |
| MDI | Methylen-4,4'-(Phenyldiisocyanat), Desmodur^{®}44 M von Bayer MaterialScience AG |
| BDO | 1,4-Butandiol |
| Irganox^{®} 1010 | Tetrakis(methylen-(3,5-di-tert.-butyl-4-hydroxycinnamate))methan, Produkt der Firma Ciba Specialty Chemicals Inc. |
| Licowax^{®}C | Trennmittel der Firma Clariant Würtz GmbH |
| MC | Melamincyanurat, Flammschutzmittel |
| M | Melamin, Flammschutzmittel |
| BDP | Bisphenol A-Diphenylphosphat, oligomeres Gemisch, Flammschutzmittel |
| IHPO | Isobutyl-bis(hydroxypropyl)-Phosphinoxid, Flammschutzmittel |

### Herstellung des TPU-A (mit IHPO und BDP)

Terathane® 1000 (650 g/min), das BDP (10 Gew.-% bezogen auf die Gesamtmenge an TPU), Irganox® 1010 (0,4 Gew.-% bezogen auf die Gesamtmenge an TPU) und Zinndioctoat (100 ppm bezogen auf die Menge an Terathane® 1000) enthielt, wurde auf 180°C erhitzt und mittels einer Zahnradpumpe kontinuierlich in das erste Gehäuse einer ZSK 53 (Zweiwellenextruder der Firma Werner&Pfleiderer) dosiert.

In dasselbe Gehäuse wurden Butandiol (98 g/min) und IHPO (51 g/min; 60°C, 4 Gew.-% bezogen auf die Gesamtmenge an TPU) gemeinsam mit Licowax® C (5 g/min; 0,4 Gew.-% bezogen auf die Gesamtmenge an TPU) kontinuierlich eindosiert.

In das Gehäuse 3 wurde anschließend Desmodur® 44 M (461 g/min) kontinuierlich eindosiert.

Die Gehäuse 1 bis 3 des Extruders waren auf 80°C und die Gehäuse 4 bis 8 auf 220 bis 230 °C erhitzt, während die letzten 4 Gehäuse gekühlt wurden. Die Drehzahl der Schnecke betrug 290 U/min.

Am Ende der Schnecke wurde die heiße Schmelze als Strang abgezogen, im Wasserbad gekühlt und granuliert.

Das TPU-A wurde als Basis für die Beispiele 1 bis 4 in einer Menge von 75 Gew.-% verwendet.

### Herstellung des TPU-B

Es wurde ein TPU mit einer Shore A Härte von 92 hergestellt. Dazu wurde ein Gemisch aus 1000 g Terathane® 1000, 180 g BDO, 7 g Irganox® 1010 und 4 g Licowax® C mit 50 ppm Zinndioctoat (bezogen auf die Menge an Terathane® 1000) unter Rühren mit einem Flügelrührer mit einer Drehzahl von 500 Umdrehungen pro Minute (UpM) auf 180°C erhitzt. Danach wurden 745 g MDI zugegeben. Anschließend wurde 110 Sekunden gerührt und das TPU ausgegossen. Abschließend wurde das Material 30 min. bei 80°C nachbehandelt. Das fertige TPU wurde geschnitten, granuliert und weiter verarbeitet.

Das TPU-B wurde als Basis für die Beispiele 5 bis 7 in einer Menge von 64,5 Gew.-% verwendet.

### Extrusion

### Einwellenextruder:

Das TPU-Granulat wurde unter Zugabe von Melamincyanurat und/oder Melamin (Mengenangaben siehe Tabelle 1) in einem Einwellen-Extruder 30/25D (Plasticorder PL 2000-6 der Firma Brabender) aufgeschmolzen (Dosierung 3 kg/h; Temperatur 230 bis 195°C) und anschließend mit einem Strang-Granulator zu Granulat aufgearbeitet (Beispiele 1 und 2).

### Doppelwellenextruder (ZSK):

Zu den hergestellten TPU-Granulaten wurden Melamin und/oder Melamincyanurat (Mengenangaben siehe Tabelle 1) zugegeben. Es wurde auf einem Extruder des Typs DSE 25, 4 Z, 360 Nm, der folgenden Aufbau aufweist:
1. kalte Einzugszone mit Förderelementen,
2. erste Heizzone (175°C) mit erster Knetzone,
3. zweite Heizzone (185°C) mit Förderelemente und zeiter Knetzone,
4. dritte Heizzone (190°C) mit Knetzone, Förderelemente und Vakuumentgasung,
5. Umlenkkopf (195°C) und Düse (190°C)
mit einer Förderleistung von 10 kg/h bei einer Drehzahl von 220 U/min extrudiert und anschließend mit einem Strang-Granulator zu Granulat aufgearbeitet (Beispiele 3 bis 7).

### Ermittlung der Flammschutzeigenschaften

Die Flammschutzeigenschaften wurden gemäß UL94 V bei einer Dicke des Prüfkörpers von 3 mm ermittelt (beschrieben in Underwriters Laboratories Inc. Standard of Safety, "Test for Flammability of Plastic Materials for Parts in Devices and Appliances", S 14 ff, Northbrook 1998 und J. Triotzsch, "International Plastics Flammability Handbook", S 346 ff, Hanser Verlag, München 1990).

In diesem Test bedeutet eine V-0 Bewertung ein nicht brennendes Abtropfen mit Nachbrennzeiten von weniger als 10 s. Ein Produkt mit dieser Bewertung wird deshalb als flammwidrig bezeichnet. Eine V-2 Bewertung bedeutet eine Nachbrennzeit von weniger als 30 s und eine Entzündung der Watte und bedeutet eine nicht ausreichende Flammwidrigkeit. Nicht bestanden bedeutet, dass das Muster noch längere Nachbrennzeiten aufweist.

**Tabelle 1:**

| | **Formulierung** | | | | **Einarbeitung MC/M** | | |
|---|---|---|---|---|---|---|---|
| **Beispiel** | **MC [Gew.%]** | **M [Gew.%]** | **BDP [Gew.%]** | **IHPO [Gew.%]** | **Einwellen-Extruder** | **ZSK** | **UL 94** |
| 1 | 25 | 0 | 7,5 | 3 | nicht | | |
| (Vergleich) | | | | | möglich | | |
| 2 | 18 | 7 | 7,5 | 3 | X | | V-0 |
| 3 | 25 | 0 | 7,5 | 3 | | X | V-2 |
| (Vergleich) | | | | | | | |
| 4 | 18 | 7 | 7,5 | 3 | | X | V-0 |
| 5 | 35,5 | 0 | 0 | 0 | | X | V-2 |
| (Vergleich) | | | | | | | |
| 6 | 25,5 | 10 | 0 | 0 | | X | V-0 |
| 7 | 0 | 35,5 | 0 | 0 | | X | Nicht |
| (Vergleich) | | | | | | | bestanden |

Alle Beispiele enthalten Flammschutzmittel in einer Gesamtmenge von 35,5 Gew.-%.

Im Vergleichsbeispiel 1 wurde das TPU-A genommen und mit 25 Gew.-% MC mittels eines Einwellenextruders extrudiert. Eine Einarbeitung des MC war nicht möglich; daher konnten keine Flammschutzeigenschaften ermittelt werden.

Im erfindungsgemäßen Beispiel 2 wurde das TPU-A mit 18 Gew.-% MC und 7 Gew.-% M über einen Einwellenextruder extrudiert. Im Gegensatz zum Vergleichsbeispiel 1 war die Einarbeitung möglich; der Brandtest ergab V-0.

Das Vergleichsbeispiel 3 beschreibt die Extrusion von TPU-A mit 25 Gew.-% MC mittels ZSK,
wobei eine Einarbeitung möglich war, jedoch der Brandtest nur eine V-2 Bewertung ergab.

Das erfindungsgemäße Beispiel 4 beschreibt die Extrusion von TPU-A mit 18 Gew.-% MC und 7 Gew.-% M. Eine Einarbeitung war möglich. Der Brandtest ergab V-0.

In den Vergleichsbeispielen 5 und 7 wurde TPU-B, welches keine weiteren Flammschutzmittel enthielt, mit 35,5 Gew.-% MC (Bsp. 5) bzw. 35,5 Gew.-% M (Bsp. 7) extrudiert. Eine Einarbeitung war möglich. Das Brandverhalten war jedoch nicht ausreichend.

Das TPU-B mit 25,5 Gew.-% MC und 10 Gew.-% M hatte sehr gute Brandeigenschaften und war sehr gut verarbeitbar.

## Patentansprüche

1. Thermoplastische Polyurethane (TPU) erhältlich aus
a) organischen und/oder modifizierten organischen Diisocyanaten
mit
b) Polyhydroxylverbindungen, insbesondere im Wesentlichen difunktionellen Polyhydroxylverbindungen
und
c) Kettenverlängerungsmitteln
in Gegenwart von
d) Flammschutzmitteln
sowie gegebenenenfalls
e) Katalysatoren
f) Kettenabbrechern
g) Hilfsmitteln und/oder Zusatzstoffen,
wobei als Flammschutzmittel Melamincyanurat und Melamin und gegebenenfalls zusätzliche andere Flammschutzmittel eingesetzt werden.

2. Verfahren zur Herstellung von thermoplastischen Polyurethanen gemäß Anspruch 1, wobei
A) organische und/oder modifizierte organische Diisocyanate (a)
mit
B) Polyhydroxylverbindungen (b), insbesondere im Wesentlichen difunktionellen Polyhydroxylverbindungen
und
C) Kettenverlängerungsmitteln (c)
in Gegenwart von
D) Flammschutzmitteln (d)
und gegebenenenfalls
E) Katalysatoren (e),
F) Kettenabbrechern (f),
G) Hilfsmitteln und/oder Zusatzstoffen (g)
umgesetzt werden, wobei als Flammschutzmittel (d) Melamin und Melamincyanurat und gegebenenfalls zusätzliche andere Flammschutzmittel eingesetzt werden.

3. Verwendung der selbstverlöschenden, thermoplastischen Polyurethane gemäß Anspruch 1 zur Herstellung von Spritzgießartikeln und Extrusionsartikeln.
